# EUROPÄISCHE PATENTANMELDUNG

(11) **EP 3 333 017 A1**
(43) Veröffentlichungstag der Anmeldung: **13.06.2018**
(21) Anmeldenummer: 17205465.2
(22) Anmeldetag: 05.12.2017
(51) Int. Cl.: B60Q 1/30, B60Q 11/00

(54) **PKW-ANHÄNGER-ELEKTRIKÜBERWACHUNGSVORRICHTUNG**

(30) Priorität: 06.12.2016 DE 102016123622
(71) Anmelder: GSK Gebrüder Klos GmbH, 66629 Freisen (DE); Sperr Kfz.-Technik Vertriebs GmbH, 61130 Nidderau (DE)
(72) Erfinder: KLOS, Thomas, 66629 Freisen-Oberkirchen (DE); SPERR, Peter, 61130 Nidderau (DE)
(74) Vertreter: Kastel, Stefan

(57) **Zusammenfassung**

Zum Schaffen einer einfach realisierbaren und dennoch sicheren NachræstlØsung fær einen Esatz fær eine Anh±ngerkupplung schafft die Erfindung eine nachræstbare PKW-Anh±nger-Elektrikæberwachungsvorrichtung (32) fær einen Personen- oder Lieferkraftwagen (10, 70), mit einer Stromkreisæberwachungseinrichtung (34), die an einen durch eine Anhtnger-Elektrosteckdose (18) des Personen- oder Lieferkraftwagens (10, 70) laufenden Stromkreis (24, 26) fær eine Anh±ngerelektrikausræstung (23), insbesondere eine Anh±ngerbeleuchtungseinrichtung (28, 30), zur- berwachung des Stromkreises (24, 26) anschlieóbar ist, um wenigstens einen Parameter des Stromkreises (24, 26) zu æberwachen und in Abh±ngigkeit davon ein - berwachungssignal auszugeben, und eine optische Anzeigeeinrichtung (36) zur Ausgabe eines optischen Signals (54) an den Fahrer des Personen- oder Lieferkraftwagens (10, 70) in Abh±ngigkeit des - berwachungssignals, wobei
a) die Stromkreisæberwachungseinrichtung (34) an einen Sender(58) zum drahtlosen Senden des - berwachungssignals angeschlossen ist und die optische Anzeigeeinrichtung (36) an einen Empf±nger (60) zum drahtlosen Empfanges des - berwachungssignals angeschlossen ist und/oder
b) die optische Anzeigeeinrichtung (36) in einem von dem Fahrer durch einen Ræckspiegel (72) des Personen- oder Lieferkraftwagens (10, 70) sichtbaren ræckw±rtigen Bereich (74) anzuordnen oder angeordnet ist.

## Beschreibung

Die Erfindung betrifft eine nachrüstbare PKW-Anhänger-Elektriküberwachungsvorrichtung, eine damit versehene Anhängerkupplungsvorrichtung zum Nachrüsten, einen damit versehenen Personen- oder Lieferkraftwagen sowie ein Verfahren zum Überwachen einer Anhängerelektrik vom Fahrerplatz eines ziehenden Pkws oder Lieferwagens aus.

Die Erfindung hat sich zur Aufgabe gestellt, im Rahmen einer Nachrüstung einer Anhängerkupplung eine einfach realisierbare und sichere Überwachung einer sicherheitsrelevanten Anhängerelektrik, wie z.B. einer Anhängerbeleuchtungseinrichtung oder einer Anhänger-Fahrtrichtungsanzeigeeinrichtung, vom Fahrerplatz des ziehenden Fahrzeugs aus zu ermöglichen.

Zum Lösen dieser Aufgabe schafft die Erfindung eine PKW-Anhänger-Überwachungsvorrichtung nach Anspruch 1 sowie ein Überwachungsverfahren nach dem nebengeordneten Verfahrensanspruch. Vorteilhafte Verwendungen sind Gegenstand der weiteren Ansprüche.

Vorteilhafte Ausgestaltungen sind Gegenstand der Unteransprüche.

Gemäß einem Aspekt schafft die Erfindung eine nachrüstbare PKW-Anhänger-Elektriküberwachungsvorrichtung für einen Personen- oder Lieferkraftwagen, mit einer Stromkreisüberwachungseinrichtung, die an einen durch eine Anhänger-Elektrosteckdose des Personen- oder Lieferkraftwagens laufenden Stromkreis für eine Anhängerelektrikausrüstung, insbesondere eine Anhängerbeleuchtungseinrichtung, zur Überwachung des Stromkreises anschließbar ist, um wenigstens einen Parameter des Stromkreises zu überwachen und in Abhängigkeit davon ein Überwachungssignal auszugeben, und eine optische Anzeigeeinrichtung zur Ausgabe eines optischen Signals an den Fahrer des Personenkraftwagens oder Lieferwagens in Abhängigkeit des Überwachungssignals, wobei die Stromkreisüberwachungseinrichtung an einen Sender zum drahtlosen Senden des Überwachungssignals angeschlossen ist und die optische Anzeigeeinrichtung an einen Empfänger zum drahtlosen Empfanges des Überwachungssignals angeschlossen ist.

Gemäß einem weiteren Aspekt schafft die Erfindung eine nachrüstbare PKW-Anhänger-Elektriküberwachungsvorrichtung für einen Personen- oder Lieferkraftwagen, mit einer Stromkreisüberwachungseinrichtung, die an einen durch eine Anhänger-Elektrosteckdose des Personen- oder Lieferkraftwagens laufenden Stromkreis für eine Anhängerelektrikausrüstung, insbesondere eine Anhängerbeleuchtungseinrichtung, zur Überwachung des Stromkreises anschließbar ist, um wenigstens einen Parameter des Stromkreises zu überwachen und in Abhängigkeit davon ein Überwachungssignal auszugeben, und eine optische Anzeigeeinrichtung zur Ausgabe eines optischen Signals an den Fahrer des Personenkraftwagens oder Lieferwagens in Abhängigkeit des Überwachungssignals, wobei die optische Anzeigeeinrichtung in einem von dem Fahrer durch einen Rückspiegel des Personen- oder Lieferkraftwagens sichtbaren rückwärtigen Bereich anzuordnen oder angeordnet ist.

Gemäß einer bevorzugten Ausgestaltung der Erfindung ist eine nachrüstbare PKW-Anhänger-Elektriküberwachungsvorrichtung für einen Personen- oder Lieferkraftwagen vorgesehen, mit einer Stromkreisüberwachungseinrichtung, die an einen durch eine Anhänger-Elektrosteckdose des Personen- oder Lieferkraftwagens laufenden Stromkreis für eine Anhängerelektrikausrüstung, insbesondere eine Anhängerbeleuchtungseinrichtung, zur Überwachung des Stromkreises anschließbar ist, um wenigstens einen Parameter des Stromkreises zu überwachen und in Abhängigkeit davon ein Überwachungssignal auszugeben, und eine optische Anzeigeeinrichtung zur Ausgabe eines optischen Signals an den Fahrer des Personenkraftwagens oder Lieferwagens in Abhängigkeit des Überwachungssignals, wobei die Stromkreisüberwachungseinrichtung an einen Sender zum drahtlosen Senden des Überwachungssignals angeschlossen ist und die optische Anzeigeeinrichtung an einen Empfänger zum drahtlosen Empfanges des Überwachungssignals angeschlossen ist und wobei die optische Anzeigeeinrichtung in einem von dem Fahrer durch einen Rückspiegel des Personen- oder Lieferkraftwagens sichtbaren rückwärtigen Bereich anzuordnen oder angeordnet ist.

Es ist bevorzugt, dass die optische Anzeigeeinrichtung wenigstens eine Kontrolllampe zum Anzeigen einer Störung und/oder eines ordnungsgemäßen Zustands des überwachten Stromkreises aufweist.

Es ist bevorzugt, dass die optische Anzeigeeinrichtung eine an eine Kfz-12V-Steckdose oder eine USB-Steckdose anschließbare und/oder ein Batteriefach zum Aufnehmen einer Batterie und/oder einen Akkumulator aufweisende Stromversorgungseinheit aufweist.

Es ist bevorzugt, dass die Stromkreisüberwachungseinrichtung zur Überwachung eines einen Fahrtrichtungsanzeiger des Anhängers antreibenden Stromkreises ausgebildet ist, um die Funktion des Fahrtrichtungsanzeigers zu überwachen.

Gemäß einem weiteren Aspekt schafft die Erfindung eine nachrüstbare Anhängerkupplungsvorrichtung für einen Personen- oder Lieferkraftwagen, umfassend eine Anhängerkupplung zum nachträglichen Einbau, eine Anhängersteckdose zum nachträglichen Einbau und eine PKW-Anhänger-Elektriküberwachungsvorrichtung nach einer der voranstehenden Ausgestaltungen.

Gemäß einem weiteren Aspekt schafft die Erfindung einen Personen- oder Lieferkraftwagen umfassend eine PKW-Anhänger-Elektriküberwachungsvorrichtung und/oder eine Anhängerkupplungsvorrichtung nach einer der voranstehenden Ausgestaltungen.

Gemäß einem weiteren Aspekt schafft die Erfindung ein Verfahren zum Überwachen einer Anhängerelektrikeinheit vom Fahrerplatz eines einen Anhänger ziehenden Personen- oder Lieferkraftwagens aus, umfassend die Schritte:
i) Überwachen eines durch eine Anhängersteckdose vom Personen- oder Lieferkraftwagen zum Anhänger laufenden Stromkreises,
ii) Übermitteln eines ein Ergebnis der Überwachung anzeigenden Überwachungssignals an eine optische Anzeigeeinrichtung und
iii) Anzeigen eines optischen Signals durch die Anzeigeeinrichtung in Abhängigkeit von dem Überwachungssignal im Sichtfeld des Fahrers,
wobei Schritt i) umfasst: drahtloses Senden des Überwachungssignals an die Anzeigeeinrichtung.

Gemäß einem weiteren Aspekt schafft die Erfindung ein Verfahren zum Überwachen einer Anhängerelektrikeinheit vom Fahrerplatz eines einen Anhänger ziehenden Personen- oder Lieferkraftwagens aus, umfassend die Schritte:
i) Überwachen eines durch eine Anhängersteckdose vom Personen- oder Lieferkraftwagen zum Anhänger laufenden Stromkreises,
ii) Übermitteln eines ein Ergebnis der Überwachung anzeigenden Überwachungssignals an eine optische Anzeigeeinrichtung und
iii) Anzeigen eines optischen Signals durch die Anzeigeeinrichtung in Abhängigkeit von dem Überwachungssignal im Sichtfeld des Fahrers,
wobei Schritt ii) umfasst: Anzeigen des optischen Signals in einem durch den Rückspiegel einsehbaren rückwärtigen Bereich des Personen- oder Lieferkraftwagens.

Gemäß einem weiteren Aspekt schafft die Erfindung ein Verfahren zum Überwachen einer Anhängerelektrikeinheit vom Fahrerplatz eines einen Anhänger ziehenden Personen- oder Lieferkraftwagens aus, umfassend die Schritte:
i) Überwachen eines durch eine Anhängersteckdose vom Personen- oder Lieferkraftwagen zum Anhänger laufenden Stromkreises,
ii) Übermitteln eines ein Ergebnis der Überwachung anzeigenden Überwachungssignals an eine optische Anzeigeeinrichtung und
iii) Anzeigen eines optischen Signals durch die Anzeigeeinrichtung in Abhängigkeit von dem Überwachungssignal im Sichtfeld des Fahrers,
wobei Schritt i) umfasst: drahtloses Senden des Überwachungssignals an die Anzeigeeinrichtung und wobei Schritt ii) umfasst: Anzeigen des optischen Signals in einem durch den Rückspiegel einsehbaren rückwärtigen Bereich des Personen- oder Lieferkraftwagens.

### Vorzugsweise ist der Schritt vorgesehen:

Überwachen eines einen Fahrtrichtungsanzeiger des Anhängers ansteuernden Stromkreises.

### Vorzugsweise ist der Schritt vorgesehen:

Überwachen wenigstens eines Parameters des Stromkreises und Vergleichen mit einem Schwellwert oder einem Sollwertbereich und Übermitteln eines eine Störung anzeigenden Überwachungssignals, wenn der Parameterwert den Schwellwert über- oder unterschreitet oder den Sollwertbereich verlässt.

Ausführungsbeispiele der Erfindung werden im Folgenden anhand der beigefügten Zeichnungen näher erläutert. Darin zeigt:
- Fig. 1: eine schematische Darstellung eines Kraftfahrzeuges mit einer Anhängerkupplung, an die ein Anhänger angeschlossen ist, und einer ersten Ausführungsform einer Überwachungsvorrichtung zur Überwachung einer Anhängerelektrik;
- Fig. 2: eine schematische Darstellung eines Kraftfahrzeuges mit einer Anhängerkupplung, an die ein Anhänger angeschlossen ist, und einer zweiten Ausführungsform einer Überwachungsvorrichtung zur Überwachung einer Anhängerelektrik;
- Fig. 3: eine schematische Blockdarstellung der Überwachungsvorrichtung; und
- Fig. 4: eine schematische Darstellung einer Anhängerkupplungsvorrichtung zum Nachrüsten, umfassend die Überwachungsvorrichtung gemäß einer weiteren Ausführungsform.

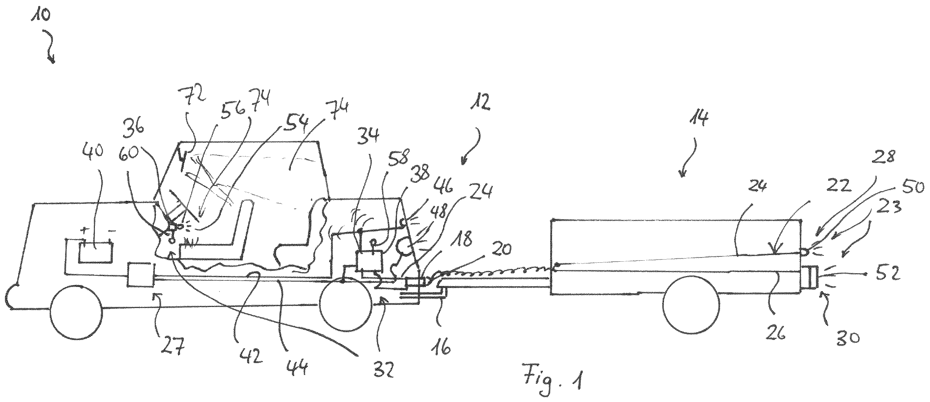

In Fig. 1 ist ein Personenkraftwagen 10 mit nachgerüsteter Anhängerkupplungsvorrichtung 12 dargestellt, an die ein Anhänger 14 angekuppelt ist.

Die Anhängerkupplungsvorrichtung 12 weist eine Anhängerkupplung 16 und eine Anhänger-Elektriksteckdose 18 zum Anschließen eines Steckers 20 des Anhängers 14 auf, um so eine unterschiedliche Anhängerelektrikausrüstungen umfassende Anhängerelektrik 22 an die Bordelektrik 27 des Personenkraftwagen 10 anzuschließen. Insbesondere sind Stromkreise 24, 26 zum Anschließen von Anhängerbeleuchtungseinrichtungen 28, 30 an die Beleuchtungselektrikversorgung des Zugfahrzeuges über die Anhänger-Elektriksteckdose 18 angeschlossen.

Hierzu ist in dem Personenkraftwagen 10 eine PKW-Anhänger-Elektriküberwachungsvorrichtung 32 nachgerüstet. Die PKW-Anhänger-Elektriküberwachungsvorrichtung 32 weist eine Stromkreisüberwachungseinrichtung 34 und eine optische Anzeigeeinrichtung 36 auf.

Die Stromkreisüberwachungseinrichtung 34 ist z.B. Teil eines nachgerüsteten Steuergeräts 38 mit einem E-Satz zur Steuerung der Anhängerelektrik. Über das Steuergerät 38 ist die Anhänger-Elektriksteckdose 18 an die Bordelektrik 27 angeschlossen. Die Bordelektrik 27 weist eine Fahrzeugbatterie 40 und Fahrzeugstromkreise 42, 44 auf. Als Beispiel sind hier ein erster Fahrzeugstromkreis 42 zum Ansteuern der Fahrtrichtungsanzeiger 46 des Personenkraftwagens 10 und ein zweiter Fahrzeugstromkreis zum Ansteuern der Fahrzeugrücklichter 48. Über das Steuergerät 38 sind entsprechende Pole der Anhänger-Elektriksteckdose 18 und somit der erste Stromkreis 24 und der Stromkreis 26 an entsprechende Fahrzeugstromkreise 42, 44 angeschlossen, so dass die Anhängerelektrikausrüstung 23, 28, 30 synchron mit einer entsprechenden Fahrzeugelektrikausrüstung 46, 48 betrieben wird. Somit werden die unterschiedlichen elektrischen Stromkreise 24, 26 des Anhängers 14 (z.B. Versorgungskreise und/oder Schaltkreise oder Ansteuerkreise) mit Strom zu versorgt.

Die in dem Steuergerät 38 implementierte Stromkreisüberwachungseinrichtung 34 überwacht mindestens einen Parameter eines zu überwachenden Stromkreises 24, 26, wie z.B. des ersten Stromkreises 24 zum Ansteuern eines Anhänger-Fahrtrichtungsanzeigers 50 ("Blinker") oder eines zweiten Stromkreises 26 zum Ansteuern von Anhänger-Rücklichtern 52.

Es gibt z.B. genormte Stecker 20 und entsprechende Steckdosen 18 mit einer genormten Anzahl von Polen (z.B. 13 Pole), wobei die entsprechenden Pole Teil eines entsprechenden zu überwachenden Stromkreises 24, 26 sein können.

Z.B ist die Stromkreisüberwachungseinrichtung 34 dazu ausgebildet, als Parameter die Spannung, den Strom und/oder die Frequenz auf dem zu überwachenden Stromkreis 24, 26 zu messen und den Messwert mit einem Schwellwert und/oder einem Sollbereichswert zu vergleichen. Die Überschreitung des Schwellwerts bzw. das Verlassen des Sollbereichswert lässt auf eine Störung schließen, so dass z.B. ein die Störung anzeigendes Überwachungssignal an die Anzeigeeinrichtung 36 ausgegeben wird.

Die Anzeigeeinrichtung 36 ist dazu ausgebildet, abhängig von dem Überwachungssignal ein optisches Signal an den Fahrer des Personenkraftwagens in dessen Sichtbereich auszugeben. Hierzu ist die Anzeigeeinrichtung 36 z.B. mit wenigstens einer Kontrolllampe 56 ausgerüstet.

Demnach ist die Stromkreisüberwachungseinrichtung 34 dazu ausgebildet, an einen durch eine Anhänger-Elektrosteckdose 18 des Personenkraftwagens 10 laufenden Stromkreis 24, 26 für eine Anhängerelektrikausrüstung 23, wie insbesondere eine Anhängerbeleuchtungseinrichtung 28, 30, angeschlossen zu werden, um den Stromkreis 24, 26 zu überwachen. Dabei wird wenigstens ein Parameter des Stromkreises 24, 26, der auf eine Störung des Stromkreises 24, 26 oder der damit angesteuerten Anhänger-Elektrikausrüstung 23 schließen lässt, überwacht und in Abhängigkeit von dieser Überwachung ein Überwachungssignal ausgegeben, das an die Anzeigeeinrichtung 36 übermittelt wird.

Die optische Anzeigeeinrichtung 36 ist zur Ausgabe eines optischen Signals 54 an den Fahrer des Personenkraftwagens in Abhängigkeit von dem Überwachungssignal ausgebildet. Dies kann ein positives Signal sein, z.B. ein grünes Licht, wenn alles in Ordnung ist, das erlischt, wenn eine Störung ermittelt wird, und/oder ein negatives Signal, z.B. ein rotes Licht oder ein Blinksignal, das aufleuchtet, wenn eine Störung erfasst wird.

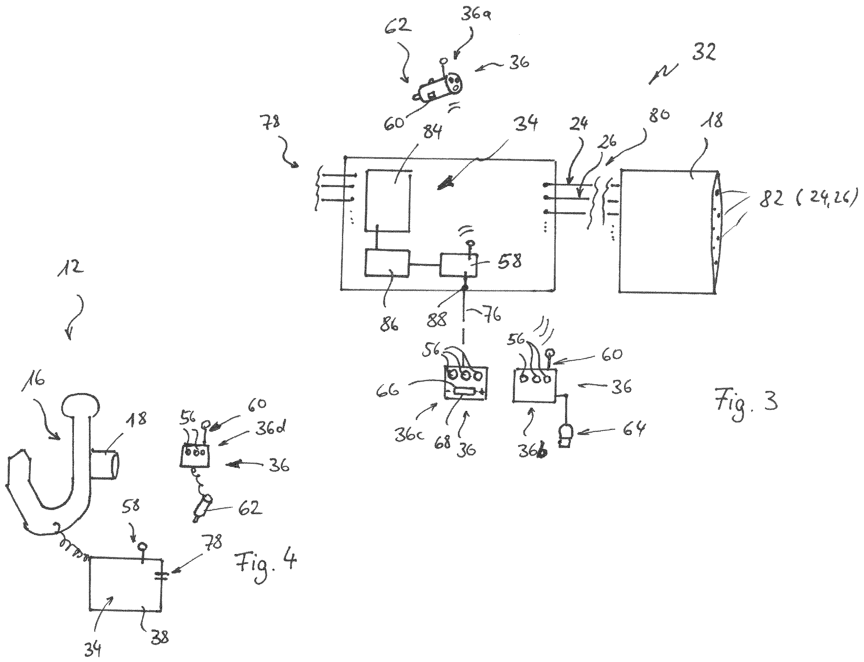

Wie in den Fig. 3 und 4 dargestellt, kann die Anzeigeeinrichtung 36 mehrere Kontrolllampen 56 aufweisen, z.B. eine erste für den rechten Fahrtrichtungsanzeiger, eine zweite für den linke Fahrtrichtungsanzeiger und eine dritte für das Rücklicht oder irgendeine andere Anhänger-Elektrikausrüstung 23. Es ist auch ein Display (nicht dargestellt) denkbar, auf dem Nachrichten oder Piktogramme, die die Störung angeben, anzeigbar sind.

Bei der in der Fig. 1 dargestellten ersten Ausführungsform weist das Steuergerät 38 einen Sender 58 zum drahtlosen Senden von Überwachungssignalen auf. Die Anzeigeeinrichtung 36 weist einen Empfänger 60 zum Empfangen der von dem Sender 58 gesendeten Signale auf.

Die Anzeigeeinrichtung 36 kann an unterschiedlichen Orten im Blickfeld des Fahrers angeordnet werden. Empfängt sie drahtlos das Überwachungssignal gibt sie so das optische Signal 54 an den Fahrer ab.

Fig. 3 zeigt eine erste Ausführungsform 36a der Anzeigeeinrichtung 36, die mit einem 12V-Stecker 62 (Stecker für den Zigarettenanzünder des Personenkraftwagens) ausgerüstet ist. So kann die Anzeigeeinrichtung 36 in die in der Regel im Blickfeld des Fahrers angeordnete 12V-Steckdose des Personenkraftwagens 10 eingesteckt werden. Weiter ist in Fig. 3 eine zweite Ausführungsform 36b der Anzeigeeinrichtung 36 dargestellt, die mit einem USB-Stecker 64 zur Stromversorgung ausgerüstet ist. Die Anzeigeeinrichtung 36 kann aber auch, wie dies bei einer dritten Ausführungsform in Fig. 3 angedeutet ist, mit einem Batteriefach 66 zur Aufnahme einer Batterie 68 oder einer wiederaufladbaren Batterie versehen sein. So kann die Anzeigeeinrichtung 36 an einem für den Fahrer gut sichtbaren Platz, z.B. am Armaturenbrett angebracht werden.

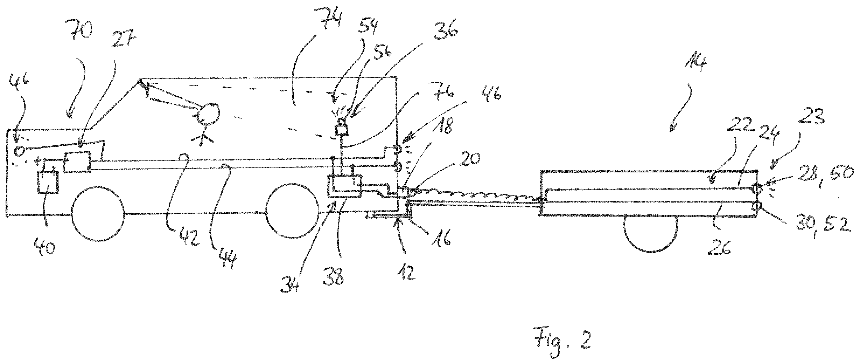

Fig. 2 zeigt eine zweite Ausführungsform der PKW-Anhänger-Elektriküberwachungsvorrichtung 32 am Beispiel einer Nutzung in einem Lieferkraftwagen 70 (z.B. Kombinationskraftwagen bis 3,5t Gesamtgewicht). Dabei entspricht die Ausführung in den meisten Teilen der ersten Ausführungsform, jedoch ist die Anzeigeeinrichtung 36 nicht im vorderen Bereich vor dem Fahrer angebracht, sondern in einem hinteren Bereich des Kraftwagens 10, 70, welcher durch einen Rückspiegel 72 durch den Fahrer von seinem Fahrerplatz aus einsehbar ist. Der durch den Rückspiegel sichtbare Bereich 74 ist durch gestrichelte Linien angedeutet.

Selbstverständlich kann dabei die Anzeigeeinrichtung 36 wie bei der ersten Ausführungsform drahtlos über Sender 58 und Empfänger 60 an die Überwachungseinrichtung 34 angeschlossen sein. Da aber bei Anordnung im hinteren Bereich ein Verkabelungsaufwand zu der in der Regel nahe der Anhänger-Elektriksteckdose 18 hinten im Kraftwagen 10, 70 angebrachten Überwachungseinrichtung 34 gering ist, kann die Anzeigeeinrichtung 36 bei dieser zweiten Ausführungsform auch drahtgebunden mit der Überwachungseinrichtung 34 verbunden sein. So kann über ein Kabel 76 sowohl die Signalübertragung als auch die Stromversorgung erfolgen.

In Fig. 3 ist die PKW-Anhänger-Elektriküberwachungsvorrichtung 32 als Blockschaltbild mit dem Steuergerät 38, einem Eingangsanschluss 78 an die Bordelektrik 27 und einem Ausgangsanschluss 80 zur Anhänger-Elektriksteckdose 18 mit den unterschiedlichen Polen 82 dargestellt. Die Stromkreisüberwachungseinrichtung 34 weist die Messeinrichtung 84 zum Messen des zu überwachenden Parameters des zu überwachenden Stromkreises 24, 26, eine Vergleichseinrichtung 86 zum Vergleichen von Ist- und Sollwert des Parameters zum Feststellen einer Störung und den Sender 58 auf, weiter ist ein Kabelanschluss 88 für die drahtgebunden Ausführung 36c der Anzeigeeinrichtung 36 vorgesehen.

Fig. 4 zeigt schematisch eine nachrüstbare Anhängerkupplungsvorrichtung 12 für einen Personen- oder Lieferkraftwagen 10, 70, umfassend die Anhängerkupplung 16 zum nachträglichen Einbau, eine Anhängersteckdose 18 zum nachträglichen Einbau und die PKW-Anhänger-Elektriküberwachungsvorrichtung 32 mit der in dem Steuergerät 38 implementierten Stromkreisüberwachungseinrichtung und einer weiteren Ausführungsform 36d der Anzeigeeinrichtung.

Es ist ersichtlich, dass mit einer derartigen PKW-Anhänger-Elektriküberwachungsvorrichtung 32, bei der eine optische Anzeigeeinrichtung entweder drahtlos ein Signal von der Überwachung von Polen der Steckdose 18 empfängt oder in einem rückwärtigen Teil des Kraftwagens 10, 70 untergebracht wird, der Verkabelungsaufwand sehr gering ist, eine optisch ansprechende Nachrüstlösung parat gestellt wird und dennoch sicher eine optische Anzeige von Störungen in dem vom Fahrer während der Fahrt sichtbaren Bereich 74 erfolgen kann.

Eine bevorzugte Verwendung der hier beschriebenen Technik betrifft ein elektronisches Steuergerät 38 für die Beleuchtung eines PKW-Anhängers 14.

Aufgrund des immer weiteren Fortschreitens der Elektronisierung der PKW-Elektrik ergeben sich vielfältige Probleme. Nur sehr wenige PKW Hersteller sehen für ihre Fahrzeuge bzw. deren Elektrik Erweiterungsmöglichkeiten vor, sofern sie nicht bereits durch den Erstkäufer bestellt werden.

Im Falle der Nachrüstung einer Anhängerkupplung 16 ist eine Erweiterung vorzusehen, da die Beleuchtungsfunktionen des ziehenden PKW 10, 70 simultan am Anhänger 14 dargestellt werden sollten.

Auf dem Markt erhältlich sind Steuergeräte, bei denen alle Beleuchtungsfunktionen des Anhängers 14 entweder über elektromechanische oder elektronische Schalter so geschaltet werden, dass sie an den Zuleitungen der Zugwagenglühlampen keine wesentliche Zusatzbelastung darstellen.

Aus Sicherheitsgründen sollten Ausfälle der Fahrtrichtungsanzeiger am Anhänger 14 im ziehenden Fahrzeug 10, 70 dem Fahrzeugführer optisch angezeigt werden.

Um diesen Wunsch erfüllen zu können, sollte der Ausfall einer Anhängerblinkleuchte entweder über eine bereits vorhandene Kontrollleuchte ("C1") oder durch eine zusätzliche Kontrollleuchte ("C2") angezeigt werden.

Im Fall einer zusätzlichen Kontrollleuchte besteht das Problem, dass bei manchen Fahrzeugen die zusätzliche Kontrollleuchte nicht im Armaturenbrett vorgesehen ist.

Ein weiteres Problem bei auf dem Markt erhältlichen Steuergeräten ist, dass das Steuergerät, welches die Kontrollleuchte ansteuert, üblicherweise hinten, also bei den meisten Fahrzeugen im Kofferraum, verbaut wird. Da die Kontrollleuchte im Sichtbereich des Fahrers anzubringen ist, bedeutet das, dass mindestens eine Leitung aus dem Kofferraum bis zum Armaturenbrett zu verlegen ist.

Dies bedeutet einen erheblichen Montageaufwand.

Eine Ausgestaltung des hier vorgestellten Steuergeräts 38 löst dieses Problem wie folgt: Das Signal, ob die Fahrtrichtungsanzeiger 50 am Anhänger 14 funktionieren oder nicht, wird durch eine geeignete elektrische Schaltung in Funkwellen gewandelt und ausgesendet. Im Sichtbereich des Fahrers wird ein zweites Gerät angebracht, welches diese Funkwellen empfängt, auswertet und ein entsprechendes optisches Signal 54 ausgibt.

Bei einer Variante wird das zweite Gerät nicht vorne, sondern im durch den Rückspiegel 72 sichtbaren hinteren Bereich des Fahrzeugs untergebracht. Bei dieser zweiten Variante kann auch ein Kabel 76, z.B. über die Rückbank verlegt werden, was einen nur geringen Verlegungsaufwand erfordert. Selbstverständlich ist aber auch hier die drahtlose Verbindung möglich.

Es ist ein elektronisches Steuergerät 38 für die Beleuchtung eines PKW-Anhängers 14 beschrieben worden, bei dem die Ansteuerung einer im Zugfahrzeug nachträglich verbauten zweiten Kontrollleuchte (C2) für die Überwachung der Fahrtrichtungsanzeiger an einem Anhänger 14 drahtlos hergestellt wird. Alternativ oder zusätzlich wird die Kontrollleuchte im rückwärtigen durch eine Rückspiegel 72 sichtbaren Bereich 74 angeordnet.

Vorzgusweise wird die Stromversorgung für dieses zweite Gerät über eine 12 Volt Steckdose, eine USB Steckdose, eine Batterie oder eine wiederaufladbare Batterie hergestellt.

### Bezugszeichenliste:

- 10: Personenkraftwagen
- 12: Anhängerkupplungsvorrichtung
- 14: Anhänger
- 16: Anhängerkupplung
- 18: Anhänger-Elektriksteckdose
- 20: Stecker des Anhängers
- 22: Anhängerelektrik
- 23: Anhängerelektrikausrüstung
- 24: erster Stromkreis (Anhänger-Fahrtrichtungsanzeiger)
- 26: zweiter Stromkreis (Anhänger-Rücklicht)
- 27: Bordelektrik
- 28: erste Anhängerbeleuchtungseinrichtung (Fahrtrichtungsanzeiger)
- 30: zweite Anhängerbeleuchtungseinrichtung (Rücklicht)
- 32: PKW-Anhänger-Elektriküberwachungsvorrichtung
- 34: Stromkreisüberwachungseinrichtung
- 36: Anzeigeeinrichtung
- 36a-36d: erste bis vierte Ausführung der Anzeigeeinrichtung
- 38: Steuergerät
- 40: Fahrzeugbatterie
- 42: erste Fahrzeugstromkreis
- 44: zweiter Fahrzeugstromkreis
- 46: Fahrzeugfahrtrichtungsanzeiger
- 48: Fahrzeugrücklicht
- 50: Anhänger-Fahrtrichtungsanzeiger
- 52: Anhänger-Rücklicht
- 54: optisches Signal
- 56: Kontrolllampe
- 58: Sender
- 60: Empfänger
- 62: 12V-Stecker
- 64: USB-Stecker
- 66: Batteriefach
- 68: Batterie
- 70: Lieferkraftwagen
- 72: Rückspiegel
- 74: sichtbarer Bereich
- 76: Kabel
- 78: Eingangsanschluss
- 80: Ausgangsanschluss
- 82: Pol der Anhänger-Elektriksteckdose
- 84: Messeinrichtung
- 86: Vergleichseinrichtung
- 88: Kabelanschluss

## Patentansprüche

1. Nachrüstbare PKW-Anhänger-Elektriküberwachungsvorrichtung (32) für einen Personen- oder Lieferkraftwagen (10, 70), mit einer Stromkreisüberwachungseinrichtung (34), die an einen durch eine Anhänger-Elektrosteckdose (18) des Personen- oder Lieferkraftwagens (10, 70) laufenden Stromkreis (24, 26) für eine Anhängerelektrikausrüstung (23), insbesondere eine Anhängerbeleuchtungseinrichtung (28, 30), zur Überwachung des Stromkreises (24, 26) anschließbar ist, um wenigstens einen Parameter des Stromkreises (24, 26) zu überwachen und in Abhängigkeit davon ein Überwachungssignal auszugeben, und eine optische Anzeigeeinrichtung (36) zur Ausgabe eines optischen Signals (54) an den Fahrer des Personen- oder Lieferkraftwagens (10, 70) in Abhängigkeit des Überwachungssignals, wobei
a) die Stromkreisüberwachungseinrichtung (34) an einen Sender (58) zum drahtlosen Senden des Überwachungssignals angeschlossen ist und die optische Anzeigeeinrichtung (36) an einen Empfänger (60) zum drahtlosen Empfanges des Überwachungssignals angeschlossen ist und/oder
b) die optische Anzeigeeinrichtung (36) in einem von dem Fahrer durch einen Rückspiegel (72) des Personen- oder Lieferkraftwagens (10, 70) sichtbaren rückwärtigen Bereich (74) anzuordnen oder angeordnet ist.

2. PKW-Anhänger-Elektriküberwachungsvorrichtung (32) nach einem der voranstehenden Ansprüche, **dadurch gekennzeichnet,**
**dass** die optische Anzeigeeinrichtung (36) wenigstens eine Kontrolllampe (56) zum Anzeigen einer Störung und/oder eines ordnungsgemäßen Zustands des überwachten Stromkreises (24, 26) aufweist.

3. PKW-Anhänger-Elektriküberwachungsvorrichtung (32) nach einem der voranstehenden Ansprüche, **dadurch gekennzeichnet,**
**dass** die optische Anzeigeeinrichtung (36) eine an einen Kfz-12V-Steckdose, eine USB-Steckdose anschließbare und/oder ein Batteriefach (66) zum Aufnehmen einer Batterie (68) und/oder einen Akkumulator aufweisende Stromversorgungseinheit aufweist.

4. PKW-Anhänger-Elektriküberwachungsvorrichtung (36) nach einem der voranstehenden Ansprüche, **dadurch gekennzeichnet,**
**dass** die Stromkreisüberwachungseinrichtung (34) zur Überwachung eines einen Fahrtrichtungsanzeiger (50) des Anhängers (14) ansteuernden Stromkreises (24) ausgebildet ist, um die Funktion des Fahrtrichtungsanzeigers (50) zu überwachen.

5. Nachrüstbare Anhängerkupplungsvorrichtung (12) für einen Personen- oder Lieferkraftwagen (10, 70), umfassend eine Anhängerkupplung (16) zum nachträglichen Einbau, eine Anhängersteckdose (18) zum nachträglichen Einbau und eine PKW-Anhänger-Elektriküberwachungsvorrichtung (32) nach einem der voranstehenden Ansprüche.

6. Personen- oder Lieferkraftwagen (10, 70) umfassend eine PKW-Anhänger-Elektriküberwachungsvorrichtung (32) nach einem der Ansprüche 1 bis 4 und/oder eine Anhängerkupplungsvorrichtung (12) nach Anspruch 5.

7. Verfahren zum Überwachen einer Anhängerelektrikausrüstung (23) vom Fahrerplatz eines einen Anhänger ziehenden Personen- oder Lieferkraftwagens aus, umfassend
7.1 Überwachen eines durch eine Anhängersteckdose (18) vom Personen- oder Lieferkraftwagen zum Anhänger laufenden Stromkreises (24, 26),
7.2 Übermitteln eines ein Ergebnis der Überwachung anzeigenden Überwachungssignals an eine optische Anzeigeeinrichtung (36) und
7.3 Anzeigen eines optischen Signals (54) durch die Anzeigeeinrichtung in Abhängigkeit von dem Überwachungssignal im Sichtfeld des Fahrers,
wobei
a) Schritt 7.2 umfasst: drahtloses Senden des Überwachungssignals an die Anzeigeeinrichtung (36) und/oder
b) Schritt 7.3 umfasst: Anzeigen des optischen Signals (54) in einem durch einen Rückspiegel (72) einsehbaren rückwärtigen Bereich (74) des Personen- oder Lieferkraftwagens (10, 70).

8. Verfahren nach Anspruch 7,
**gekennzeichnet durch**
Überwachen eines einen Fahrtrichtungsanzeiger (50) des Anhängers (14) ansteuernden Stromkreises (24).

9. Verfahren nach einem der Ansprüche 7 oder 8,
**gekennzeichnet durch**
Überwachen wenigstens eines Parameters des Stromkreises (24, 26) und Vergleichen mit einem Schwellwert oder einem Sollwertbereich und Übermitteln eines eine Störung anzeigenden Überwachungssignals, wenn der Parameterwert den Schwellwert über- oder unterschreitet oder den Sollwertbereich verlässt.
